# EUROPEAN PATENT SPECIFICATION

(11) **EP 1 834 526 B1**
(45) Date of publication and mention of the grant of the patent: **16.12.2009**
(21) Application number: 07075198.7
(22) Date of filing: 15.03.2007
(51) Int. Cl.: A22C 21/06

(54) **Device for taking entrails packages**
Vorrichtung zum Aufnehmen von Innereien
Dispositif pour prendre des paquets d'entrailles

(30) Priority: 16.03.2006 NL 1031380
(43) Date of publication of application: 19.09.2007
(73) Proprietor: Systemate Group B.V., 3281 NC Numansdorp (NL)
(72) Inventor: Stooker, Dirk Cornelis, 3295 AL 's-Gravendeel (NL); Van der Waal, Dirk Hermen, 3281 LT Numansdorp (NL)
(74) Representative: Seerden, Adrianus Maria

(56) References cited:
- EP-A- 1 222 858
- BE-A- 813 138
- US-A- 4 467 498

## Description

The invention relates to a device and a method for taking packages of entrails of eviscerated small live stock carcasses, particularly poultry.

Removing the packages of entrails of poultry carcasses can take place more or less immediately subsequent to eviscerating the carcasses, by also severing the gullet to which the entrails are attached. This requires an eviscerating tool of a complex structure.

According to an alternative approach the gullet is severed by means of a tool inserted into the carcass cavity after evisceration, after which the entrails package is separate from the carcass. This requires an additional tool.

In another approach the gullet is manually ripped apart after evisceration. This is a difficult job, requiring a lot of force.

From Belgian patent 813.138 a device is known for inspecting recently eviscerated entrails packages of carcasses still connected to the carcass cavity by membranes and the like, wherein in order not to soil the carcasses, immediately after evisceration the entrails packages are kept apart from the carcasses by a stationary guide placed along the path of the carcasses. During the movement along the guide, stomach and liver may optionally still be harvested. By means of for instance two stationary rods defining a slit space, and deflecting from the path of the carcasses, the bowel packages can be progressively removed from the carcasses and subsequently be collected in a tray or the like.

From US patent specification 4.467.498 a device for separating packages of entrails of carcasses is known, wherein the carcasses, with the already eviscerated packages of entrails hanging beside them, are passed along a rotating, inclined drum, which drum is provided with arms at the ends of which there are clamps. The arms with clamps are inserted into the carcass cavity after which the clamp closes about a part of the gullet, between the crop and the stomach. Because of the different movement paths of the clamp and the carcass, the arm with the clamp rotates out of the carcass cavity again while exerting a large tensile force onto the gullet. Immediately after pulling out, the package of entrails hangs from the clamp, and can be inspected. Subsequently the clamp is opened and the entrails can be delivered to a discharge. A drawback of this known device is that it is rather complex and failure-prone.

From European patent application EP-A1-1 222 858 a device for removing entrails from a carcass is known, in which a pulling element is inserted into the carcass to eviscerate the entrails from the carcass. A clamping element comprising a U-shaped bar having side elements and a rotatable clamping bar ensures that a part of the gullet is fixedly clamped between the clamping bar and a side element when the entrails have been eviscerated from the carcass by the pulling element. Subsequently the entrails are pulled away from of the carcass by moving the carcass holder (suspended from a conveyor path) and the clamping element (arranged on a carrousel) apart. The clamping bar and the side element, however, extend radially from the carrousel, so that in case of (radial) moving apart of the carcass and the clamping element with entrails fixedly clamped in between them (by clamping forces oriented tangential to the carrousel), the entrails may slide from between the clamping bar and the side elements, and pulling loose might take place in a less defined manner.

It is an object of the invention to provide a device and/or method with which in a simple and reliable way packages of entrails can be separated from the carcasses in series.

From one aspect the invention provides a device for separating carcasses of small live stock animals from the packages of entrails eviscerated from the carcasses and connected thereto by the gullet, comprising a first conveyor provided with respective holders for the carcasses for transportation in series of the carcasses according to a first path, and a second conveyor provided with a series of shielders/retainers for shielding/retaining the packages from the carcasses held by the holders, wherein the second conveyor is positioned for movement according to a second path having a first track going up together with the first conveyor, wherein the packages can be engaged by the shielders/retainers, and a subsequent second track, diverging from the first path, for increasing the distance between the carcasses and the related packages to pull the gullet loose or rupture it, wherein the shielders/retainers are adapted for discharging the released packages.

The gullet can thus automatically, by engagement outside of the carcass, be ruptured or pulled loose. The capacity may be high here, whereas personnel is economised on. The rupturing of the gullet can be established immediately.

In one embodiment of a device according to the invention the shielders/retainers are designed such that the shielding/retaining force exerted on the packages by the shielders/retainers is contrary to a direction of divergence of the second track and the first path. As a result pulling loose can take place in a highly defined way without the entrails being able to slide from the shielders/retainers. The shielders/retainers have been provided in particular with an element for engaging the packages, which element is positioned transverse to the direction of divergence.

In one embodiment the device is furthermore provided with means for, between the carcass and the package of entrails, forming a stop for a piece of entrails connected to the gullet, which stop moves along with the second path, thus enhancing the rupturing. Because the gullet is still connected to the carcass cavity the package will be tugged when the package is moved away. The package will therefore move against the stop, until an obstacle in the form of the muscular stomach abuts the edge. The transitional area from gullet to gizzard is relatively weak, as a result of which the gullet will easily rupture at that location. This also applies to the attachment of the gizzard to the muscular stomach as a result of which the separation can also take place there.

Rupturing is further enhanced when the shielders/retainers have been provided with a thickened edge for the gullet, which edge preferably also forms the stop.

Discharging the packages is enhanced when the shielders/retainers form a holder having a substantially vertical passage.

Discharging can further be controlled when the holders have been provided with a movable bottom wall that is movable between a package support position and a package passage position. In said latter position the packages can be discharged at a selected place.

The second conveyor may have been provided with means for moving the shielders/retainers up and down, between a lowered position free from a package and a lifted position in which a package has been picked up. As a result the engagement of the packages is enhanced, and as a result so is the subsequent detachment or rupturing of the gullet.

The shielders/retainers may comprise first and second shielders/retainers, that are movable towards each other in order to form a narrowing for an organ of the packages in an operative position in mutual cooperation. The first shielders/retainers can be moved upward to the operative position, and the second shielders/retainers can be moved downward. With a stop edge, the second shielders/retainers may extend up to the first shielders/retainers, particularly a stop edge thereof, while leaving the narrowing open for improved confinement of the package.

In addition thereto, or alternatively, the second shielders/retainers may with a stop edge extend over the first shielders/retainers, particularly a stop edge thereof, in order to offer a stop for the muscular stomach also in cases where the muscular stomach is situated a little closer to the carcass, such as between the legs, where a stop edge on the first shielder/retainer is unable to reach or only with a lot of difficulty.

The engagement of a muscular stomach situated between the legs is enhanced when the stop edge of the second shielders/retainers extending over the first shielders/retainers is positioned for a rotary or swinging motion from above in the direction of the first shielders/retainers.

Alternatively the stop edge of the second shielders/retainers extending over first shielders/retainers may for that purpose be positioned for a substantially horizontal rotary or swinging motion in the direction of the first shielders/retainers. The muscular stomach may then be urged away from between the legs in the direction of the first shielders/retainers. Optionally it may be possible to position the muscular stomach such before the first shielders/retainers have approached that the muscular stomach can be engaged by them.

In one embodiment the device has furthermore been provided with a third conveyor for transportation of separated packages, wherein the shielders/retainers are adapted for discharging the packages to the third conveyor during movement according to the second track. The packages are then discharged and transported away almost immediately after detachment or rupture of the gullet.

The third conveyor may be situated below at least a part of the second track and below a discharge track of the first conveyor downstream of the start of the second track. The start of the second track and the start of the discharge track of the first conveyor may then be spaced apart. The discharge of the packages can then take place parallel to the discharge of the carcasses so that the occupation of space can remain within limits.

The first conveyor may be an overhead conveyor. The second conveyor may be a carrousel on which the shielders/retainers have been arranged. The third conveyor may be a belt conveyor.

In an as regards construction compact embodiment, the second path is circulating about one or several vertical centre lines, preferably according to a circular path.

From one aspect the invention provides a device for separating carcasses of small live stock animals from the packages of entrails eviscerated from the carcasses and connected thereto by the gullet, comprising a first conveyor provided with respective holders for the carcasses for transportation in series of the carcasses according to a first path, and a second conveyor provided with a series of pickers or confiners for picking up the packages from the carcasses held by the holders, wherein the second conveyor is positioned for movement according to a second path having a first track going up together with the first conveyor, wherein the packages can be picked up by the pickers, and a subsequent second track, diverging from the first path, for increasing the distance between the carcasses and the related packages to pull the gullet loose or rupture it, wherein the pickers are adapted for discharging the released packages.

From a further aspect the invention provides a method for separating carcasses of small live stock animals from the packages of entrails eviscerated from the carcasses and connected thereto by the gullet, wherein the carcasses are transported in series according to a first path wherein shielders/retainers or package pickers that move along, are moved between the carcasses and the related packages, after which the packages according to a second path followed by the shielders/retainers and diverging from the first path followed by the carcasses are diverted from carcasses following the first path in order to detach or rupture the gullet, after which the packages are collected for discharge.

The shielders/retainers in particular exert a force on the packages that is contrary to the direction of divergence of the first and second path.

Advantageously the entrails are retained by a stop for that purpose in order to move to the carcass. Preferably the gullet is ruptured near the stomach, particularly near the transition of the gullet to the gizzard, or detached by rupture between gizzard and muscular stomach.

In one embodiment the packages are engaged by holder moving upward which are subsequently moved away from the carcasses in horizontal direction.

After separation of the packages they are able to fall downward from the holder, optionally collected on a discharge conveyor. Use can be made of a valve or the like, that can be moved between a position holding the package up and a position releasing the package.

The aspects and measures described and/or shown in the application may where possible also be used individually. Said individual aspects may be the subject of divisional patent applications relating thereto.

The invention will be elucidated on the basis of an exemplary embodiment shown in the attached drawings, in which:
Figure 1 shows a schematic top view of an arrangement including an exemplary embodiment of a device according to the invention;
Figure 2 shows a schematic side view of the device shown in figure 1;
Figures 3A-C show a bottom part of the device of figures 1 and 2 in detail, in front view, side view and top view, respectively;
Figures 4A-C show a top part of the device of the figures 1 and 2 cooperating with the bottom part of the figures 3A-C, in detail in front view, side view and top view, respectively;
Figures 5A-E show consecutive steps in the use of the device of the figures 1 and 2;
Figures 5F and 5G show details of figures 5B and 5C;
Figure 6 shows an alternative embodiment of the bottom part of figures 3A-C;
Figure 7 shows an alternative embodiment of the top part of figures 4A-C; and
Figure 8 shows another alternative embodiment of the top part of the figures 4A-C.

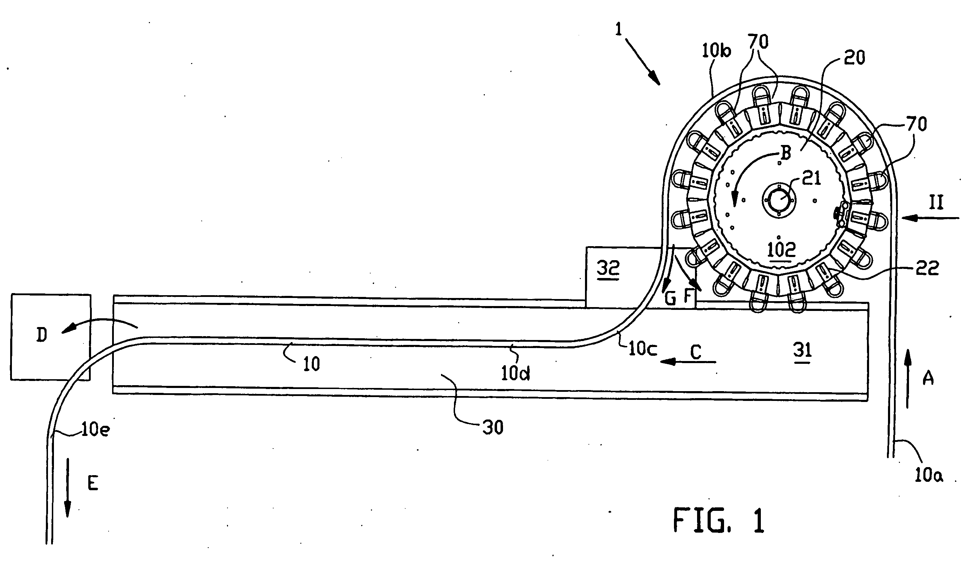

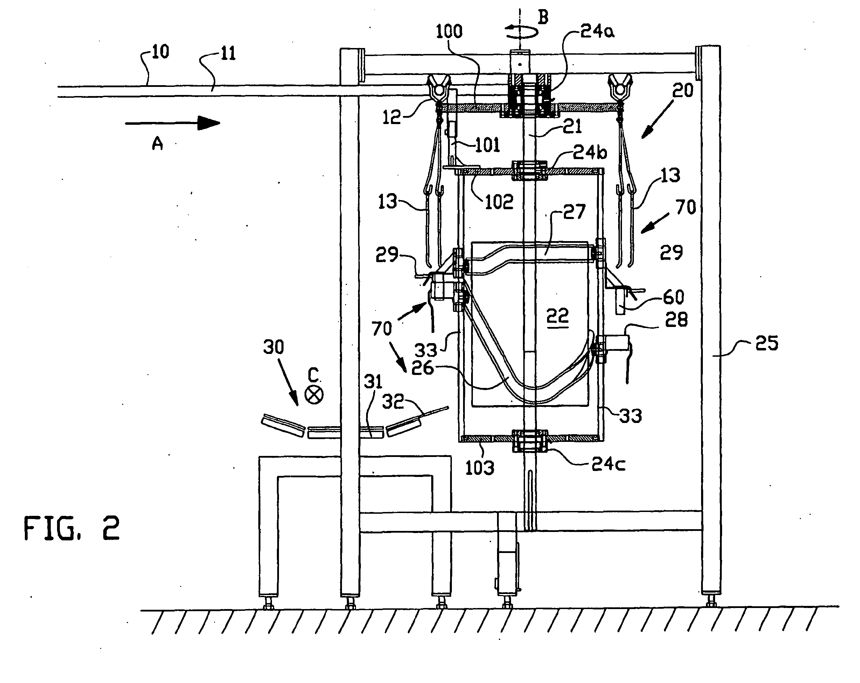

Figure 1 schematically shows an overhead conveyor 10, which, also see figure 2, is adapted for overhead transportation of carcasses, in the manner known per se, wherein for instance by means of a chain trolleys 12 connected to each other are moved over/along a tube 11. The trolleys 1 2 have been provided with brackets 1 3 in which the legs of the carcasses can be hung.

The carcasses come from the direction A, the track 10a, from an evisceration station, not shown, where the packages of entrails have been eviscerated from the carcasses. The packages of entrails are still connected to the carcass cavity via the gullet, wherein the packages of entrails hang down beside the carcass.

The track 10a changes into semicircular track 10b, circulating with a package separation device 20 in an exemplary embodiment of the invention. The track 10b bends away from the device 20 in track 10c, and changes into a straight track 10d.

A discharge conveyor 30 having a conveyor belt 31 is situated below the straight track 10d. At the end of the conveyor 30 the overhead conveyor 10 bends away into track 10e.

The device 20 further shown in figures 2 and further, comprises a carrousel rotated by said chain in direction B via chain wheel 100 (left out in figure 1) bearing-mounted at the location of 24a on axle 21 permanent to the frame 25. The carrousel comprises an upper plate wheel 102 and a lower plate wheel 103 which at the location of 24b and 24c are bearing-mounted on the permanent axle 21.

A drum 22 has been arranged on the permanent axle 21, which drum has been provided with circulating curve tracks 26 and 27. The curve tracks 26 and 27 have been arranged for vertical movement, in a controlled manner, of a first shielder/retainer or lower unit 28 and a second shielder/retainer or upper unit 29, which have been arranged so as to be vertically slidable on rods 33, which themselves have been attached to an upper plate wheel 102 and a lower plate wheel 103, respectively, that rotate along with chain wheel 100 (via coupling 101 and rods 33). The lower unit 28, upper unit 29 and rods 33 together form a unit 70, wherein, as shown in figure 1, several units 70 have been arranged divided over the circumference of the drum 22, and such that the units 70 run in register with the trolleys 1 2/brackets 13 in the track 10b.

As can also be seen in figure 1, at the location of track 10c below the overhead conveyor 10 an inclined plate 32 has been placed that ends up above the conveyor 30, particularly above the conveyor belt 31 thereof.

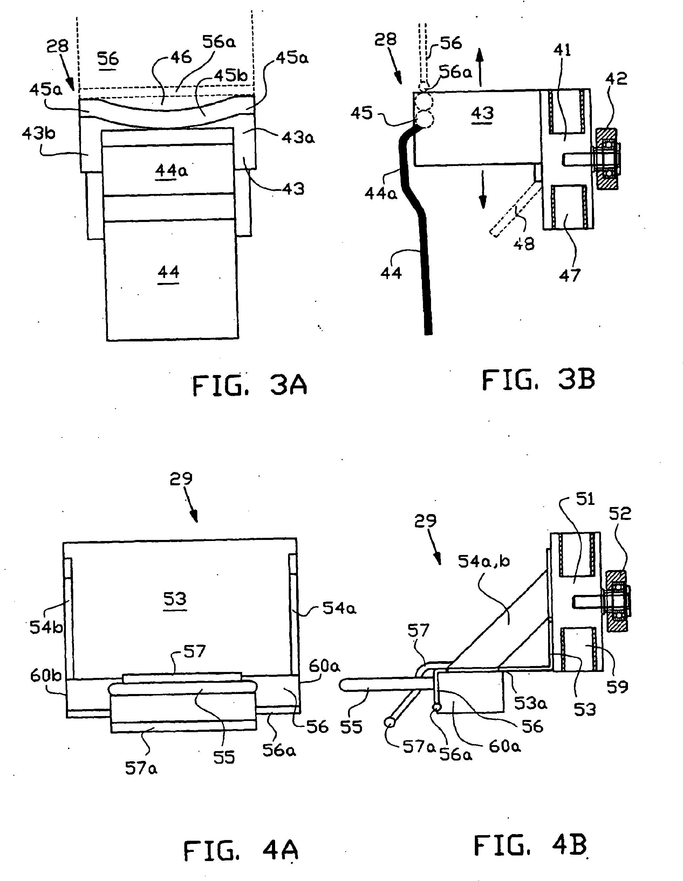

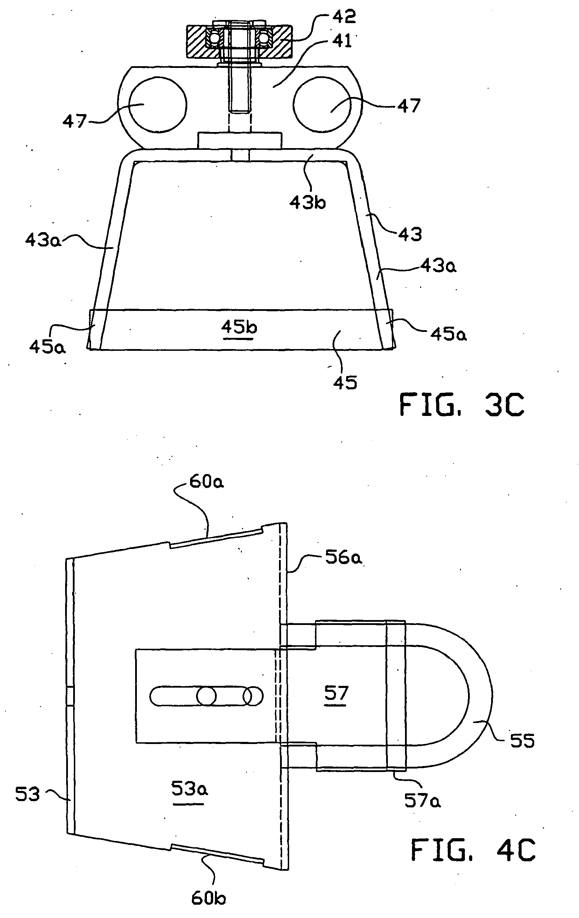

The lower unit 28 shown in figure 3A-C comprises support member 41, that has been provided with vertical passages 47 for the rods 33 that have not been shown. The support 41 has furthermore been provided with a freely rotating roller 42 which fits in the curve track 26 in order to be guided and controlled by it.

At the opposite side of the support 41 the base wall 43b of a plate 43 is attached, which plate is U-shaped in top view and with legs 43a bounds a vertical passage in sideward directions. At the open side thereof facing away from the support 41, a slightly-V-shaped curved rod 45 has been attached, with the ends 45a welded to the side walls 43a. The V-rod 45 forms a stop edge for a muscular stomach and leaves an opening 46 free for accommodation of the tailbone of a carcass. At the V-rod 45 a support plate 44 has been attached extending downward, and defining a projecting surface 44a for support of the back of a carcass.

The lower unit 28 may have been provided with a permanent inclined plate 48 (shown in dashed lines), with which it is prevented that entrails soil the carrousel.

The upper unit 29 shown in figures 4A-C, comprises a support 51 having vertical passages 59 for the rods 33 that have not been shown. The support 51 has been provided with a freely rotatable roller 52, guided and controlled by curve track 27. A Z-shaped plate 53 has been attached to the support 51, which plate is reinforced by means of shores 54a, b. At the end of the horizontal leg 53a near the lower ends of the shores 54a, b, the Z-shaped plate 53 has been turned to vertical plate 56 provided with a thickened edge 56a. On the plate 53a a plate 57 has been attached, which has been provided with a thickened round end edge 57a and extending downward at approximately 45°. The plate 57 extends through a bracket 55, that has been attached to the plate 56 and is intended to extend between the legs of a carcass. On either side the side plates 60a,b extend downward from the plate section 53a welded to plate section 53a and to plate 56.

When a carcass hanging from a bracket 13 is supplied in track 10a and finally arrives at the start of track 10b, the brackets 55 run in between the legs of the carcass in question. The carcass is then positioned by the bracket 55 as well. Due to cooperation of the roller 52 and the curve track 27, the upper unit 29 is lowered in the direction I, resulting in the inclined plate 57 also moving downward. The plate 56 offers an inward stop for the legs.

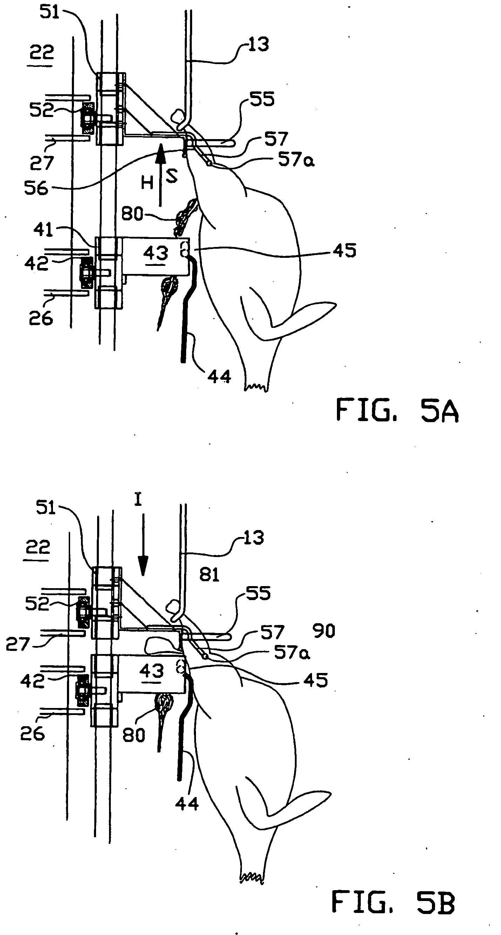

After that, as illustrated in figure 5A, the lower unit 28 is moved upward in the direction H, due to engagement of the curve track 26 onto the roller 42. Here the V-rod 45 and the subsequent support plate 44 move between the package of entrails 80 and the carcass.

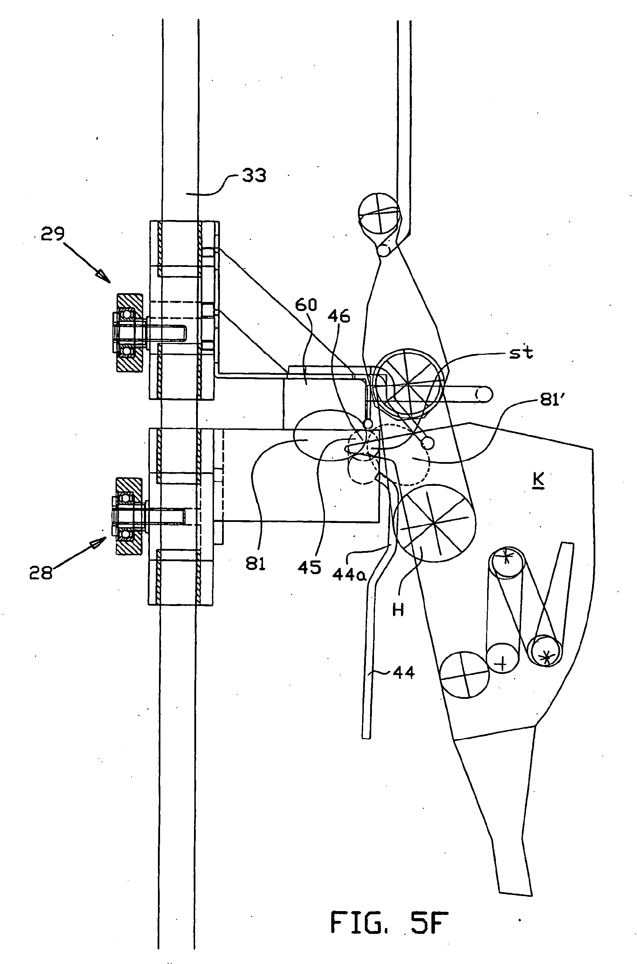

The tailbone then slides along the plate 44 that moves upward, is pushed slightly to the outside by the projecting surface 44a and then ends up in the recess 46 so that the carcass will abut the plate 44 with the back. At that moment the thickening on the back at the location of the hips of the carcass is situated at the projecting surface 44a. The plate 44 fits between the hips. Due to these provisions, and also because the upper unit 29 presses slightly downward onto the carcass, the carcass is held slightly tilted, as a result of which the muscular stomach can be positioned more advantageously and will end up more often at the wanted side of the rod 45. Usually the muscular stomach 81 will be situated on its back, at the side of the V rod 45 facing away from the carcass, as illustrated in figure 5F (see below).

The upward movement of the lower unit 28 continues until the rod 45 has arrived at the thickened edge 56a, in the position shown in dashed lines in figures 3a and 3B. Said position is shown in figures 5B and 5F, in which it can be seen that the thickened edge sits almost in one vertical plane with the rod 45. The passage 46 formed is small enough to stop organs yet to allow the gullet S through without any or hardly any impediment. The plates 60a,b nearly connect to the upper edges of the walls 43a.

It can be seen that the wall 57a extends over the rod 45. This is so because in case the muscular stomach 81 is situated between the legs, and therefore remains out of reach of the rod 45, a stop for the muscular stomach is offered nonetheless, see figure 5F, No. 81'. The location of the muscular stomach depends on the eviscerator used.

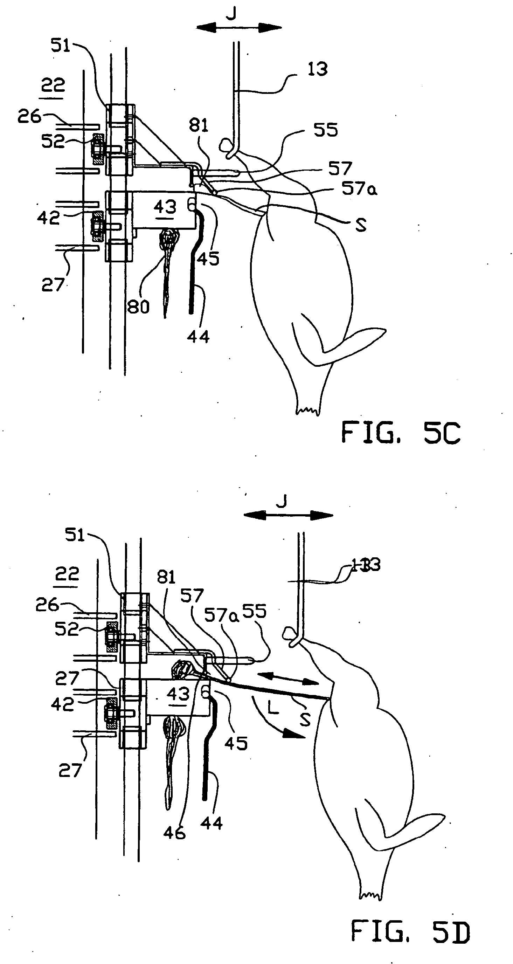

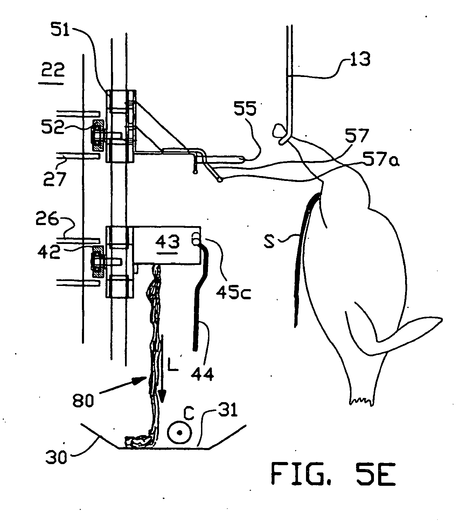

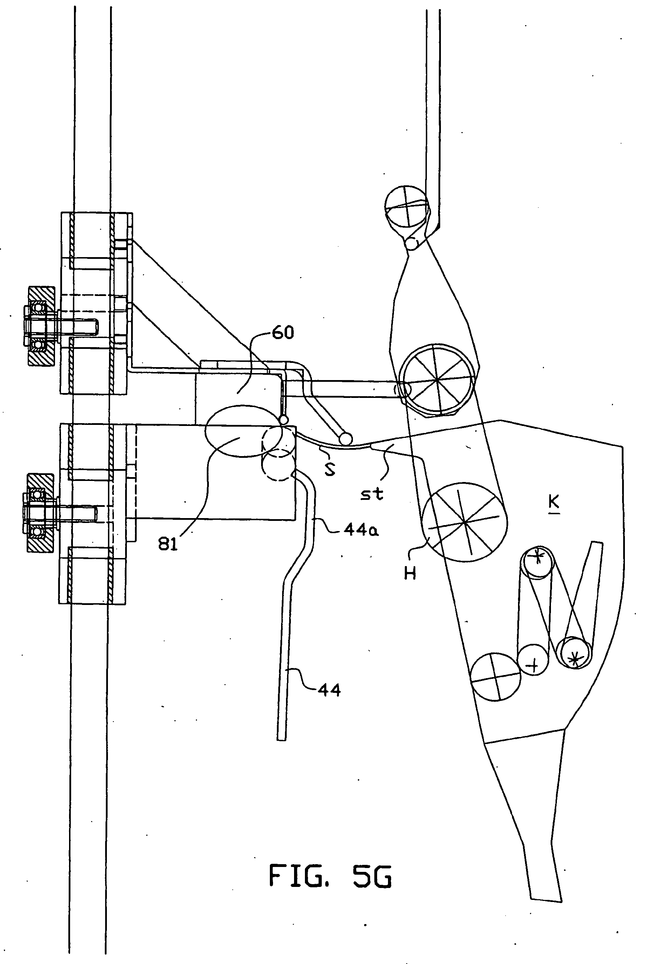

This all takes place in track 10b. At the start of track 10c, see figure 1, the path of the trolleys 12, brackets 13 runs in the direction G, in the horizontal plane diverging from the circular path F that the units 70 follow there. As a result a widening is created in the direction J (figures 5C, 5G) between the units 70 and the related carcasses. The gullet that is still attached to the carcass will move along with the carcass. As a result the package of entrails 80 will tend to move along, pulled along by the gullet. The muscular stomach 81 however is stopped by the rod 45, or when the muscular stomach is situated between the legs, by the edge 57a. In case of continuing separation, see figure 5D, between the unit 70 and the carcass, the gullet will be put under tension further. Because the paths of the units 70 and the carcasses keep moving apart the tension in the gullet will in the end become so high that it ruptures at the muscular stomach, or that the connection between gizzard and muscular stomach is detached. The plates 60a,b together with the walls 43a prevent by sideward confinement that during the diverging motion the package can be pulled sideward between the upper unit 29 and the lower unit 28. After that the package of entrails is separated from the carcass and will, as shown in figure 5E fall in the direction L from the passage defined by U-plate 43, and end up on the belt 31 of the conveyor 30. Because the units 70, forming a retainer for the package of entrails when the gullet is tugged, are driven in circulation themselves, the separation process is enhanced.

The entrails are transported away in the direction C with the conveyor belt 31, and at the end are discharged in the direction D to a discharge tray 90. The carcasses hanging from the brackets 13 continue their way in path 10e, in the direction E, for further processing. Please note that the courses shown of the various paths are an example. The belt conveyor 30 may for instance follow a path deviating from the overhead conveyor 10.

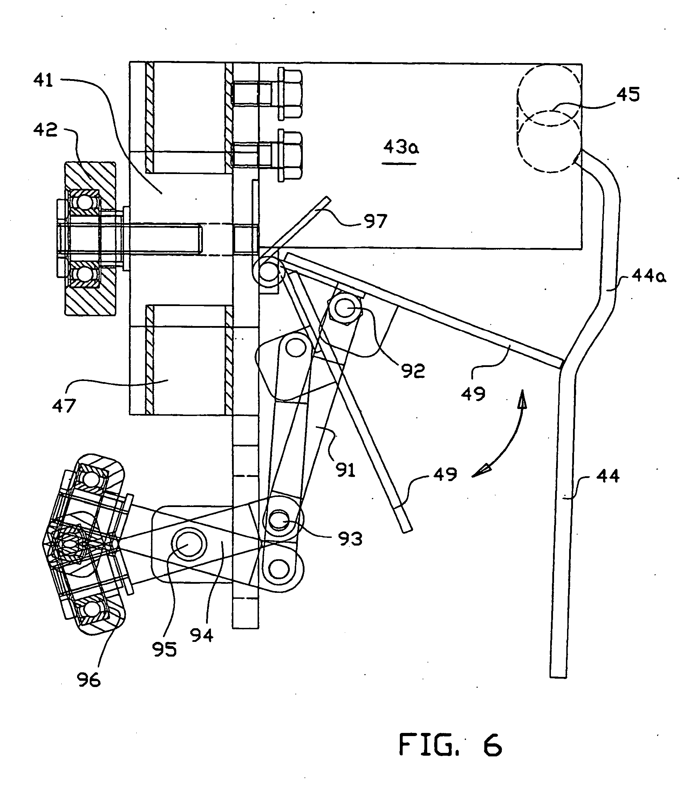

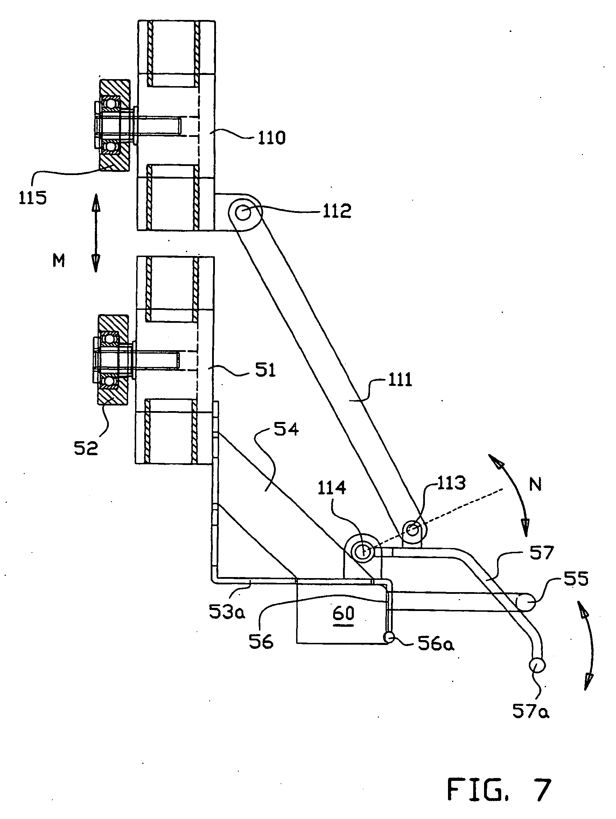

In the embodiment of figure 6, the lower unit 28 has been provided with a movable bottom valve 49 which is suspended so as to hinge at the location of 90. A torsion spring 97 biasses the valve 49 to a closed position against the plate 44. For opening the valve 49 to the shown receiving/discharge position (in which it is also prevented that the entrails soil the carrousel) an operating mechanism has been provided, built up from a rod with hinge ends 91 which at the location of 92 is hinged to the valve 49 and at the location of 93 to a lever 94, which at the location of 95 is hinged to lower unit 28 and to support member 41 and at the end has been provided with a roller 96, that is moved by a curve track (not shown) on the drum 22. In the embodiment of figure 7 the upper unit 29 has been supplemented with a further support member 110 having a control roller 115 that runs in a curve track (not shown) on the drum 22. At the location of 112 a rod with hinge ends 111 has been hinged to the support member 110, which rod with hinge ends at the lower end at the location of 113 is hinged to the plate 57 that has been provided with a stop edge 57a. In this case the plate 57 is hinged to the plate 53 at the location of 114. Because of the suitable course of the curve tracks for the rollers 52 and 115 the mutual distance between the support members 51 and 110 can be changed (direction M), as a result of which the plate 57 rotates in directions N, about hinge 114. In this way the edge 57a, after lowering the upper unit 29 - or in the end stage thereof -, is able to make a motion engaging rearward with respect to a muscular stomach that is situated between the legs, so that a proper engagement of the muscular stomach is ensured.

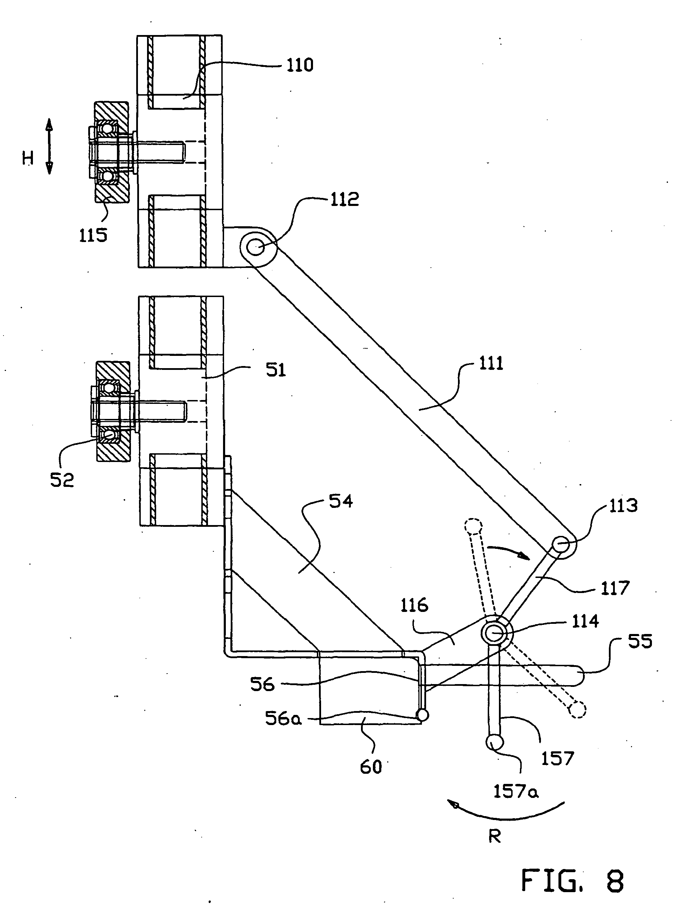

In the alternative embodiment of figure 8 the plate 57 is extended by rod 117, which at the location of 114 is hinged to lip 116 that is fixedly attached to the front side of plate 56, and at the location of 113 is hinged to rod with hinge ends 111. When slide or support member 110 is moved downward (M) the rod 117 will rotate from the position shown in dashed lines to the position shown in continuous lines. In that case the plate 57 will tilt in direction R towards the plate 56, as a result of which a muscular stomach optionally situated - as considered in the drawing - on the left of the plate 57 is slid to the plate 56. This can also be done prior to the lower unit 28 having been moved entirely upward, in order to position the muscular stomach such, that it will come to lie - as considered in the drawing- on the left hand side of the rod 45, within the walls 43a and plate 44.

## Claims

1. Device (1) for separating carcasses (K) of small live stock animals from the packages (80) of entrails eviscerated from the carcasses and connected thereto by the gullet (S), comprising a first conveyor (10) provided with respective holders (13) for the carcasses for transportation in series of the carcasses according to a first path, and a second conveyor (20) provided with a series of shielders/retainers (28,29) for shielding/retaining the packages from the carcasses held by the holders, wherein the second conveyor (20) is positioned for movement according to a second path having a first track (10b) going up together with the first conveyor, wherein the packages (90) can be engaged by the shielders/retainers, and a subsequent second track (10c), diverging from the first path, for increasing the distance between the carcasses (K) and the related packages (80) to pull the gullet (S) loose or rupture it, wherein the shielders/retainers (28,29) are adapted for discharging the released packages (80).

2. Device (1) according to claim 1, wherein the shielders/retainers (28,29) are designed such that the shielding/retaining force exerted on the packages (80) by the shielders/retainers is contrary to a direction of divergence of the second track (10c) and the first path.

3. Device (1) according to claim 2, wherein the shielders/retainers (28,29) have been provided with an element (45,56) for engaging the packages (80), which element is positioned transverse to the direction of divergence.

4. Device (1) according to claim 1, 2 or 3, wherein the shielders/retainers (28,29) can be moved up and down, for in an upward movement penetrating between the entrails (80) and the carcass (K).

5. Device according to any one of the preceding claims, furthermore provided with engagement (45,56) means for engaging about the gullet (S) at opposite sides for forming a retainer or stop for a piece of entrails (80,81) connected to the gullet (S), which retainer or stop moves along with the second path.

6. Device (1) according to claim 5, wherein the engagement means (45,56) comprise edges which on the one side have been provided on the shielder/retainer (28) and on the other side on a stop member (29) moving according to the second path, wherein the shielder/retainer (28) and the stop member (29) are movable with respect to each other between positions that are situated at a relatively long distance from each other and positions forming a stop with each other.

7. Device (1) according to any one of the preceding claims, wherein the shielders/retainers (28,29) each form a holder having a substantially vertical passage.

8. Device (1) according to claim 7, wherein the shielders/retainers (28,29) have been provided with a movable bottom wall (49) that is movable between a package support position and a package passage position.

9. Device (1) according to any one of the preceding claims, wherein the shielders/retainers comprise first (28) and second (29) shielders/retainers, that are movable towards each other in order to form a narrowing (46) for an organ of the packages in an operative position of mutual cooperation.

10. Device (1) according to claim 9, wherein the first shielders/retainers (28) can be moved upward to the operative position, and the second shielders/retainers (29) can be moved downward.

11. Device (1) according to claim 9 or 10, wherein with a stop edge (56a), the second shielders/retainers (29) extend up to the first shielders/retainers (28), particularly a stop edge (45a) thereof, while leaving the narrowing (46) open.

12. Device (1) according to claim 9, 10 or 11, wherein with a stop edge (57a,157a) the second shielders/retainers (29) extend over the first shielders/retainers (28), particularly a stop edge (45) thereof.

13. Device (1) according to claim 12, wherein the stop edge (157a) of the second shielders/retainers (29) extending over first shielders/retainers (28) is positioned for a rotary or swinging motion (R) from above in the direction of the first shietders/retainers (28).

14. Device (1) according to claim 12, wherein the stop edge (157a) of the second shielders/retainers extending over first shielders/retainers (28) is positioned for a substantially horizontal rotary or swinging motion (R) in the direction of the first shielders/retainers (28).

15. Device (1) according to any one of the preceding claims, furthermore provided with a third conveyor (30) for transportation (C) of separated packages (80), therein the shielders/retainers (28,29) are adapted for discharging the packages to the third conveyor during movement according to the second track.

16. Device (1) according to claim 15, wherein the third conveyor is situated below at least a part of the second track and below a discharge track of the first conveyor downstream of the start of the second track (10c).

17. Device (1) according to claim 16, wherein the start of the second track (10c) and the start of the discharge track of the first conveyor (10) are spaced apart.

18. Device (1) according to any one of the preceding claims, wherein the first conveyor (10) is an overhead conveyor (10).

19. Device (1) according to any one of the preceding claims, wherein the second conveyor (20) is a carrousel (102,103,33) on which the shielders/retainers (28 29) have been arranged.

20. Device (1) according to any one of the preceding claims, wherein the second path is circulating about one or several vertical centre lines, preferably according to a circular path.

21. Device (1) according to any one of the preceding claims, wherein the third conveyor (30) is a belt conveyor (31).

22. Method for separating carcasses (K) of small live stock animals from the packages (80) of entrails eviscerated from the carcasses and connected thereto by the gullet (S), wherein the carcasses are transported in series according to a first path wherein shielders/retainers that move along are moved between the carcasses (K) and the related packages (80), after which the packages according to) a second path followed by the shielders/retainers (28,29) and diverging (10c) from the first path followed by the carcasses are diverted from carcasses following the first path in order to detach or rupture the gullet (S), after which the packages (80) are collected for discharge.

23. Method according to claim 22, wherein the shielders/retainers (28,29) exert a force on the packages (80) that is contrary to the direction of divergence of the first and second path.

24. Method according to claim 22 or 23, wherein the shielders/retainers (28) are moved in upward direction between carcass (K) and entrails package (80).

25. Method according to any one of the claims 22-24, wherein the shielder/retainers (28,29) have a first edge which in cooperation with a second edge (56a) following the second path forms a narrowing (46) for stopping the entrails package in a motion towards the carcass, while allowing the gullet (S) through.

26. Method according to any one of the claims 22-25, wherein the gullet (S) is ruptured near the gizzard.

27. Method according to any one of the claims 22-26, wherein the gullet is detached by separation between muscular stomach (81) and gizzard.

28. Method according to any one of the claims 22-27, wherein after rupture of the gullet (S), the packages (80) fall downward on a discharge.

29. Method according to any one of the claims 22-28, wherein the packages (80) are collected on a discharge conveyor (30).

## Patentansprüche

1. Vorrichtung (1) zum Trennen von Schlachtkörpern (K) kleiner Tiere von den Gebinden (80) mit aus den Schlachtkörpern entnommenen und damit durch die Speiseröhre (S) verbundenen Innereien, umfassend ein erstes Fördersystem (10), welches mit entsprechenden Haltern (13) für die Schlachtkörper für den Transport in Reihe der Schlachtkörper entlang einer ersten Bahn versehen ist, und ein zweites Fördersystem (20), welches mit einer Reihe von Abschirmungen/Rückhaltern (28, 29) zum Abschirmen/Rückhalten der Gebinde von den von den Haltern gehaltenen Schlachtkörpern versehen ist, wobei das zweite Fördersystem (20) für eine Bewegung entlang einer zweiten Bahn positioniert ist, wobei eine erste Spur (10b) zusammen mit dem ersten Fördersystem aufwärts führt, wobei die Gebinde (80) von den Abschirmungen/Rückhaltern (28, 29) eingegriffen werden können, und wobei eine nachfolgende zweite Spur (10c) von der ersten Bahn wegführt, um den Abstand zwischen den Schlachtkörpern (K) und den zugehörigen Gebinden (80) zu vergrößern, um die Speiseröhre (S) abzulösen oder durchzureißen, wobei die Abschirmungen/Rückhalter (28, 29) dafür ausgelegt sind, die gelösten Gebinde (80) auszustoßen.

2. Vorrichtung (1) nach Anspruch 1, wobei die Abschirmungen/Rückhalter (28, 29) derart ausgebildet sind, dass die durch die Abschirmungen/Rückhalter (28, 29) auf die Gebinde (80) ausgeübte Abschirmungs-/Rückhaltekraft zu einer Abweichungsrichtung der zweiten Spur (10c) und der ersten Bahn entgegengesetzt ist.

3. Vorrichtung (1) nach Anspruch 2, wobei die Abschirmungen/Rückhalter (28, 29) mit einem Element (45, 56) zum Eingreifen an den Gebinden (80) versehen sind, wobei das Element quer zu der Abweichungsrichtung positioniert ist.

4. Vorrichtung (1) nach Anaspruch 1, 2 oder 3, wobei die Abschirmungen/Rückhalter (28, 29) nach oben und unten bewegt werden können, um in einer Abwärtsbewegung zwischen den Innereien (80) und dem Schlachtkörper (K) einzudringen.

5. Vorrichtung nach einem der vorangehenden Ansprüche, welche ferner mit Eingreifmitteln (45, 56) zum Eingreifen über der Speiseröhre (S) an gegenüberliegenden Seiten versehen ist, um einen Rückhalter oder Anschlag für ein mit der Speiseröhre (S) verbundenes Innereiteil (80, 81) zu bilden, wobei sich der Rückhalter oder Anschlag mit der zweiten Bahn zusammen bewegt.

6. Vorrichtung (1) nach Anspruch 5, wobei die Eingreifmittel (45, 46) Ränder umfassen, welche an einer Seite auf der Abschirmung/dem Rückhalter (28) und an der anderen Seite auf einem Anschlagelement (29) vorgesehen sind, welches sich entlang der zweiten Bahn bewegt, wobei die Abschirmung/der Rückhalter (28) und das Anschlagelement (29) bezüglich einander zwischen Positionen bewegbar sind, die relativ weit voneinander entfernt sind, und Positionen, die miteinander einen Anschlag bilden.

7. Vorrichtung (1) nach einem der vorangehenden Ansprüche, wobei die Abschirmungen/Rückhalter (28, 29) jeweils einen Halter mit einem im Wesentlichen vertikalen Durchlass bilden.

8. Vorrichtung (1) nach Anspruch 7, wobei die Abschirmungen/Rückhalter (28, 29) mit einer beweglichen Bodenwand (49) versehen sind, die zwischen einer Gebindehalteposition und einer Gebindedurchlassposition bewegbar ist.

9. Vorrichtung (1) nach einem der vorangehenden Ansprüche, wobei die Abschirmungen/Rückhalter (28, 29) erste (28) und zweite (29) Abschirmungen/Rückhalter umfassen, die zueinander bewegbar sind, um eine Verengung (46) für einen Bestandteil der Gebinde in einer Betriebsposition gegenseitigen Zusammenwirkens zu bilden.

10. Vorrichtung (1) nach Anspruch 9, wobei die ersten Abschirmungen/Rückhalter (28) bezüglich der Betriebsposition nach oben und die zweiten Abschirmungen/Rückhalter (29) nach unten bewegt werden können.

11. Vorrichtung (1) nach Anspruch 9 oder 10, wobei sich die zweiten Abschirmungen/Rückhalter ( 29) mit einer Anschlagskante (56a) nach oben zu den ersten Abschirmungen/Rückhaltern (28), insbesondere einer Anschlagskante daran, erstrecken, wobei sie die Verengung (46) offen lassen.

12. Vorrichtung (1) nach Anspruch 9,10 oder 11, wobei sich die zweiten Abschirmungen/Rückhalter (29) mit einer Anschlagskante (57a, 157a) über den ersten Abschirmungen/Rückhaltern (28), insbesondere über einer Anschlagskante (45) daran, erstrecken.

13. Vorrichtung (1) nach Anspruch 12, wobei die Anschlagskante (157a) der zweiten Abschirmungen/Rückhalter (29), die sich über den ersten Abschirmungen/Rückhaltern (28) erstreckt, für eine Dreh- oder Schwingbewegung (R) von oben in Richtung der ersten Abschirmungen/Rückhalter (28) positioniert ist.

14. Vorrichtung (1) nach Anspruch 12, wobei die Anschlagskante (157a) der zweiten Abschirmungen/Rückhalter die sich über den ersten Abschirmungen/Rückhaltern (28) erstreckt, für eine im Wesentlichen horizontale Dreh- oder Schwingbewegung (R) in Richtung der ersten Abschirmungen/Rückhalter (28) positioniert ist.

15. Vorrichtung (1) nach einem der vorangehenden Ansprüche, welche ferner mit einem dritten Fördermittel (30) für den Transport (C) abgetrennter Gebinde (80) versehen ist, wobei die Abschirmungen/Rückhalter (28, 29) dafür ausgelegt sind, die Gebinde während der Bewegung entlang der zweiten Spur zu dem dritten Fördersystem auszustoßen.

16. Vorrichtung (1) nach Anspruch 15, wobei das dritte Fördersystem unter wenigstens einem Teil der zweiten Spur und unter einer Abstoßspur des ersten Fördersystems stromabwärts des Beginns der zweiten Spur (10c) angeordnet ist.

17. Vorrichtung (1) nach Anspruch 16, wobei der Beginn der zweiten Spur (10c) und der Beginn der Ausstoßspur des ersten Fördersystems (10) einen Abstand aufweisen.

18. Vorrichtung (1) nach einem der vorangehenden Ansprüche, wobei das erste Fördersystem (10) ein Hängefördersystem (10) ist.

19. Vorrichtung (1) nach einem der vorangehenden Ansprüche, wobei das zweite Fördersystem (20) ein Karussell (102, 103, 33) ist, an welchem die Abschirmungen/Rückhalter (28, 29) angeordnet sind.

20. Vorrichtung (1) nach einem der vorangehenden Ansprüche, wobei die zweite Bahn über einer oder mehreren vertikalen Mittellinien zirkuliert, vorzugsweise gemäß einer kreisförmigen Bahn.

21. Vorrichtung (1) nach einem der vorangehenden Ansprüche, wobei das dritte Fördersystem (30) ein Förderband (31) ist.

22. Verfahren zum Trennen von Schlachtkörpern (k) kleiner Tiere von den Gebinden (80) mit aus den Schlachtkörpern entnommenen und damit durch die Speiseröhre (S) verbundenen Innereien, wobei die Schlachtkörper in Reihe entlang einer ersten Bahn transportiert werden, wobei sich mitbewegende Abschirmungen/Rückhalter zwischen den Schlachtkörpern (K) und den zugehörigen Gebinden (80) bewegt werden, wonach die Gebinde entlang einer zweiten Bahn, gefolgt von den Abschirmungen/Rückhaltern (28, 29) und abweichend (10c) von der ersten Bahn, gefolgt von den Schlachtkörpern, entlang der ersten Bahn von den Schlachtkörpern weggelenkt werden, um die Speiseröhre (S) abzulösen oder durchzureißen, wonach die Gebinde (80) zum Ausstoßen gesammelt werden.

23. Verfahren nach Anspruch 22, wobei die Abschirmungen/Rückhalter (28, 29) eine Kraft auf die Gebinde (80) ausüben, die entgegengesetzt zu der Weglenkrichtung der ersten und zweiten Bahn ist.

24. Verfahren nach Anspruch 22 oder 23, wobei die Abschirmungen/Rückhalter (28) in einer Aufwärtsrichtung zwischen Schlachtkörper (K) und Innereiengebinde (80) bewegt werden.

25. Verfahren nach einem der Ansprüche 22-24, wobei die Abschirmungen/Rückhalter (28, 29) eine erste Kante aufweisen, welche in Zusammenwirken mit einer zweiten Kante (56a) entlang der zweiten Bahn eine Verengung (46) zum Anhalten des Innereiengebindes in einer Bewegung zu dem Schlachtkörper hin bildet, wobei die Speiseröhre (S) hindurchgelassen wird.

26. Verfahren nach einem der Ansprüche 22-25, wobei die Speiseröhre (S) in der Nähe des Kaumagens durchgerissen wird.

27. Verfahren nach einem der Ansprüche 22-26, wobei die Speiseröhre durch eine Trennung zwischen dem Muskelmagen (81) und dem Kaumagen durchgerissen wird.

28. Verfahren nach einem der Ansprüche 22-27, wobei die Gebinde (80) nach dem Reißen der Speiseröhre (S) auf einen Auslass nach unten fallen.

29. Verfahren nach einem der Ansprüche 22-28, wobei die Gebinde (80) auf einem Ausstoßförderband (30) gesammelt werden.

## Revendications

1. Dispositif (1) pour séparer les carcasses (K) de petits animaux d'élevage des paquets (80) d'entrailles retirées des carcasses et reliées à celles-ci par l'oesophage (S), comprenant un premier transporteur (10) pourvu de supports respectifs (13) pour les carcasses en vue du transport en série des carcasses sur un premier trajet, et un deuxième transporteur (20) pourvu d'une série d'éléments de protection/retenue (28 ; 29) afin de protéger/retenir les paquets des carcasses maintenues par les supports, dans lequel le deuxième transporteur (20) est positionné de manière à se déplacer sur un deuxième trajet ayant une première piste (10b) montant conjointement avec le premier transporteur, dans lequel les paquets (80) peuvent être engagés par les éléments de protection/retenue, et une deuxième piste suivante (10c), divergeant du premier trajet, pour augmenter la distance entre les carcasses (K) et les paquets correspondants (80) pour tirer l'oesophage (S) et le détacher ou le rompre, dans lequel les éléments de protection/retenue (28, 29) sont adaptés au déchargement des paquets libérés (80).

2. Dispositif (1) selon la revendication 1, dans lequel les éléments de protection/retenue (28, 29) sont configurés de sorte que la force de protection/retenue exercée sur les paquets (80) par les éléments de protection/retenue soit contraire à la direction de divergence de la deuxième piste (10c) et du premier trajet.

3. Dispositif (1) selon la revendication 2, dans lequel les éléments de protection/retenue (28, 29) ont été pourvus d'un élément (45, 56) pour engager les paquets (80), lequel élément est positionné transversalement à la direction de divergence.

4. Dispositif (1) selon la revendication 1, 2 ou 3, dans lequel les éléments de protection/retenue (28, 29) peuvent être déplacés vers le haut et le bas pour pénétrer, dans un mouvement ascendant, entre les entrailles (80) et la carcasse (K).

5. Dispositif selon l'une quelconque des revendications précédentes, pourvu par ailleurs de moyens d'engagement (45, 56) pour engager l'oesophage (S) sur les côtés opposés afin de former un élément de retenue ou un arrêt pour un paquet d'entrailles (80, 81) relié à l'oesophage (S), lequel élément de retenue ou arrêt se déplace le long du deuxième trajet.

6. Dispositif (1) selon la revendication 5, dans lequel les moyens d'engagement (45, 56) comprennent des bords qui se présentent, d'un côté, sur l'élément de protection/retenue (28) et, de l'autre côté, sur un élément d'arrêt (29) qui se déplace sur le deuxième trajet, dans lequel l'élément de protection/retenue (28) et l'élément d'arrêt (29) peuvent être déplacés l'un par rapport à l'autre entre des positions qui sont situées à une distance relativement grande l'une de l'autre et des positions qui forment un arrêt mutuel.

7. Dispositif (1) selon l'une quelconque des revendications précédentes, dans lequel les éléments de protection/retenue (28, 29) forment chacun un support ayant un passage sensiblement vertical.

8. Dispositif (1) selon la revendication 7, dans lequel les éléments de protection/retenue (28, 29) ont été pourvus d'une paroi de fond mobile (49) qui peut être déplacée entre une position de support de paquet et une position de passage de paquet.

9. Dispositif (1) selon l'une quelconque des revendications précédentes, dans lequel les éléments de protection/retenue comprennent des premiers (28) et des deuxièmes (29) éléments de protection/retenue qui peuvent être déplacés l'un vers l'autre afin de former un rétrécissement pour un organe des paquets en position opérationnelle de coopération mutuelle.

10. Dispositif (1) selon la revendication 9, dans lequel les premiers éléments de protection/retenue (28) peuvent être déplacés vers le haut en position opérationnelle et les deuxièmes éléments de protection/retenue (29) peuvent être déplacés vers le bas.

11. Dispositif (1) selon la revendication 9 ou 10, dans lequel les deuxièmes éléments de protection/retenue (29) s'étendent par un bord d'arrêt (56a) jusqu'aux premiers éléments de protection/retenue (28), en particulier par un bord d'arrêt (45a) de ceux-ci, tout en laissant le rétrécissement (46) ouvert.

12. Dispositif (1) selon la revendication 9, 10 ou 11, dans lequel les deuxièmes éléments de protection/retenue (29) s'étendent par un bord d'arrêt (57a, 157a) sur les premiers éléments de protection/retenue (28), en particulier un bord d'arrêt (45) de ceux-ci.

13. Dispositif (1) selon la revendication 12, dans lequel le bord d'arrêt (157a) des deuxièmes éléments de protection/retenue (29) s'étendant sur les premiers éléments de protection/retenue (28) est positionné pour effectuer un mouvement rotatif ou oscillant (R) partant du dessus dans la direction des premiers éléments de protection/retenue (28).

14. Dispositif (1) selon la revendication 12, dans lequel le bord d'arrêt (157a) des deuxièmes éléments de protection/ retenue s'étendant sur les premiers éléments de protection/retenue (28) est positionné pour un mouvement rotatif ou oscillant sensiblement horizontal dans la direction des premiers éléments de protection/retenue.

15. Dispositif (1) selon l'une quelconque des revendications précédentes, pourvu en outre d'un troisième transporteur (30) pour le transport (C) de paquets séparés (80), dans lequel les éléments de protection/retenue (28, 29) sont adaptés au déchargement des paquets sur le troisième transporteur durant le déplacement sur la deuxième piste.

16. Dispositif (1) selon la revendication 15, dans lequel le troisième transporteur est situé en dessous d'au moins une partie de la deuxième piste et en dessous d'une piste de déchargement du premier transporteur en aval du début de la deuxième piste (10c).

17. Dispositif (1) selon la revendication 16, dans lequel le début de la deuxième piste (10c) et le début de la piste de décharge du premier transporteur (10) sont espacés l'un de l'autre.

18. Dispositif (1) selon l'une quelconque des revendications précédentes, dans lequel le premier transporteur (10) est un transporteur suspendu (10).

19. Dispositif (1) selon l'une quelconque des revendications précédentes, dans lequel le deuxième transporteur (20) est un carrousel (102, 103, 33), sur lequel ont été agencés les éléments de protection/retenue (28, 29).

20. Dispositif (1) selon l'une quelconque des revendications précédentes, dans lequel le deuxième trajet circule autour d'une ou plusieurs lignes centrales verticales, de préférence sur un trajet circulaire.

21. Dispositif (1) selon l'une quelconque des revendications précédentes, dans lequel le troisième transporteur (30) est un transporteur à bande (31).

22. Procédé pour séparer des carcasses (K) de petits animaux d'élevage des paquets (80) d'entrailles retirées des carcasses et reliées à celles-ci par l'oesophage (S), dans lequel les carcasses sont transportées en série sur un premier trajet, dans lequel les éléments de protection/retenue qui se déplacent le long de celui-ci, sont déplacés entre les carcasses (K) et les paquets correspondants (80), après quoi les paquets qui se déplacent sur un deuxième trajet suivi par les éléments de protection/retenue (28, 29) et divergeant (10c) du premier trajet suivi par les carcasses sont déviés des carcasses suivant le premier trajet afin de détacher ou de rompre l'oesophage (S), après quoi les paquets (80) sont recueillis pour le déchargement.

23. Procédé selon la revendication 22, dans lequel les éléments de protection/retenue (28, 29) exercent sur les paquets (80) une force qui est contraire à la direction de divergence des premier et deuxième trajets.

24. Procédé selon la revendication 22 ou 23, dans lequel les éléments de protection/retenue (28) sont déplacés dans une direction ascendante entre la carcasse (K) et le paquet d'entrailles (80).

25. Procédé selon l'une quelconque des revendications 22 à 24, dans lequel les éléments de protection/retenue ont un premier bord qui, en coopération avec un second bord (56a) suivant le deuxième trajet, forme un rétrécissement (46) pour stopper le paquet d'entrailles dans un mouvement vers la carcasse tout en permettant à l'oesophage (S) de passer.

26. Procédé selon l'une quelconque des revendications 22 à 25, dans lequel l'oesophage (S) est rompu près du gésier.

27. Procédé selon l'une quelconque des revendications 22 à 26, dans lequel on détache l'oesophage par séparation entre l'estomac musculaire (81) et le gésier.

28. Procédé selon l'une quelconque des revendications 22 à 27, dans lequel, après rupture de l'oesophage (S), les paquets tombent en bas sur une décharge.

29. Procédé selon l'une quelconque des revendications 22 à 28, dans lequel les paquets (80) sont recueillis sur un transporteur de décharge (30).
